# FASCICULE DE BREVET EUROPEEN

(11) **EP 0 963 693 B1**
(45) Date de publication et mention de la délivrance du brevet: **17.09.2003**
(21) Numéro de dépôt: 99401292.0
(22) Date de dépôt: 31.05.1999
(51) Int. Cl.: A01G 31/00

(54) **Procédé et installation pour le forçage des endives**
Verfahren und Anlage zum Treiben von Chicorée
Process and device for forcing belgian endives

(30) Priorité: 11.06.1998 FR 9807343
(43) Date de publication de la demande: 15.12.1999
(73) Titulaire: Capelle, Hubert, 80110 Beaucourt en Santerre (FR)
(72) Inventeur: Capelle, Hubert, 80110 Beaucourt en Santerre (FR)
(74) Mandataire: Bonnetat, Christian

(56) Documents cités:
- EP-A- 0 387 971
- EP-A- 0 500 484
- BE-A- 903 315
- DD-A- 284 274
- FR-A- 2 345 912
- US-A- 3 935 673
- DATABASE WPI Section PQ, Week 8652 Derwent Publications Ltd., London, GB; Class P13, AN 86-345105 XP002095054 & SU 1 228 806 A (AGRIC ELECTR RES), 7 mai 1986 (1986-05-07)

## Description

La présente invention a pour objet un procédé et une installation pour le forçage des endives.

On sait que le forçage des endives se fait par culture hydroponique, dans une chambre noire où les chicons peuvent pousser à l'abri de la lumière. Les racines d'endives sur lesquelles poussent lesdits chicons sont disposées côte à côte dans des bacs ou casiers empilés et sont alimentées en permanence par une solution nutritive, qui s'écoule par gravité depuis les bacs supérieurs jusqu'aux bacs inférieurs. L'air ambiant dans la chambre noire est renouvelé en permanence et sa température est maintenue sensiblement constante au voisinage de 15°C à 22°C (en fonction de la saison et du degré de maturité des racines) pendant toute la durée du forçage, qui, de façon usuelle, est de vingt et un jours. Un tel procédé est connu de EP-A-0 500 484.

Pour obtenir de meilleurs rendements, il serait souhaitable de pouvoir allonger cette durée de forçage. Cependant, avec les techniques usuelles de forçage, cela n'est pas possible du fait que le dépassement de la durée de forçage optimale de vingt et un jours entraîne :
- un allongement de la tige (généralement appelée "axe") du bourgeon central des chicons, de sorte que la longueur de cet axe peut dépasser une limite au-delà de laquelle les chicons risquent de s'ouvrir au cours de la commercialisation ;
- une augmentation des risques sanitaires, avec notamment apparition de taches rougeâtres, dues à l'action des bactéries erwynia ; et
- un dessèchement du bord des feuilles des chicons.

Ainsi, le dépassement de la durée de forçage usuelle de vingt et un jours rend les endives inaptes à la commercialisation. Un tel dépassement est donc, sinon impossible, du moins fortement déconseillé.

Dans ces conditions, à partir du vingt et unième jour, si les endives ne sont pas immédiatement livrées à un acheteur, elles doivent être stockées à l'obscurité et au froid en attendant leur expédition, afin de ne pas verdir trop précocement. Un tel stockage d'attente est donc onéreux et nécessite de nombreuses manipulations.

La présente invention a pour objet de remédier à ces inconvénients. Elle concerne un procédé et un dispositif permettant d'allonger la durée de forçage des chicons au-delà de vingt et un jours pour obtenir des chicons de grande qualité dont la longueur de l'axe reste inférieure à 50% de la longueur totale desdits chicons, sans risques sanitaires ni dessèchement, et en éliminant les coûteux stockages d'attente de livraison.

A cette fin, selon l'invention, le procédé pour le forçage hydroponique de chicons, selon lequel des racines d'endives, disposées dans l'obscurité, sont en permanence ventilées par un flux d'air et alimentées par une solution nutritive, est remarquable en ce qu'on agit sur la température du flux d'air de ventilation et sur la température de la solution nutritive pour donner à la température du coeur desdits chicons une valeur qui dépend du temps de forçage déjà écoulé depuis le début du forçage desdits chicons.

Ainsi, grâce à une telle mesure, il est possible de contrôler la pousse de l'axe et notamment de ralentir celle-ci par abaissement de la température des chicons.

On peut donc alors augmenter la durée totale du forçage, par exemple jusqu'à au moins vingt-quatre jours, sans que la longueur de l'axe dépasse ladite limite mentionnée ci-dessus, sans dessèchement des chicons (puisque ceux-ci continuent d'être nourris) et sans attaque bactérienne.

De préférence, le forçage conforme à la présente invention peut comporter une première phase initiale dont les conditions sont semblables à celles des procédés de forçage connus. Cette première phase peut durer au plus jusqu'au dix-septième jour et la température du coeur desdits chicons est réglée pour que, à la fin de cette première phase, elle soit au plus égale à 23°C.

Le procédé de forçage conforme à la présente invention comporte alors une seconde phase qui commence au plus tôt le quinzième jour de forçage et au cours de laquelle la température atteinte par le coeur desdits chicons à la fin de ladite première phase est progressivement diminuée jusqu'à une température finale de l'ordre de 6°C à 9°C.

Ainsi, dans le cadre de la présente invention, à chaque jour du forçage correspond un couple de valeurs de température, respectivement pour la solution nutritive et pour l'axe de ventilation, qui permet de contrôler la température du coeur des chicons et donc la pousse de l'axe de ces derniers.

Il est donc avantageux que des chicons ayant le même nombre de jours de forçage, décompté depuis le début de celui-ci, soient regroupés.

Aussi, conformément à un autre aspect de la présente invention, une installation pour le forçage hydroponique de chicons, dans laquelle des racines d'endives, disposées dans l'obscurité, sont en permanence ventilées par un flux d'air et alimentées par une solution nutritive, est remarquable en ce qu'elle comporte :
- une pluralité de chambres, dans chacune desquelles ne sont disposés que des chicons ayant sensiblement le même nombre de jours de forçage, décompté depuis le début de celui-ci ;
- une pluralité de moyens de ventilation, dont chacun d'eux est associé à l'une desdites enceintes et est apte à introduire dans l'enceinte associée un flux d'air de température réglable ; et
- une pluralité de moyens d'alimentation en solution nutritive, dont chacun d'eux est associé à l'une desdites chambres et est apte à alimenter les chicons disposés dans l'enceinte associée avec une solution nutritive de température réglable.

En pratique, il est avantageux que ladite installation comporte sept chambres.

Les figures du dessin annexé feront bien comprendre comment l'invention peut être réalisée. Sur ces figures, des références identiques désignent des éléments semblables.

La figure 1 est une vue schématique d'un exemple de réalisation d'une installation de forçage d'endives conforme à la présente invention.

La figure 2 est un diagramme donnant un exemple de variation des températures en fonction du temps de forçage.

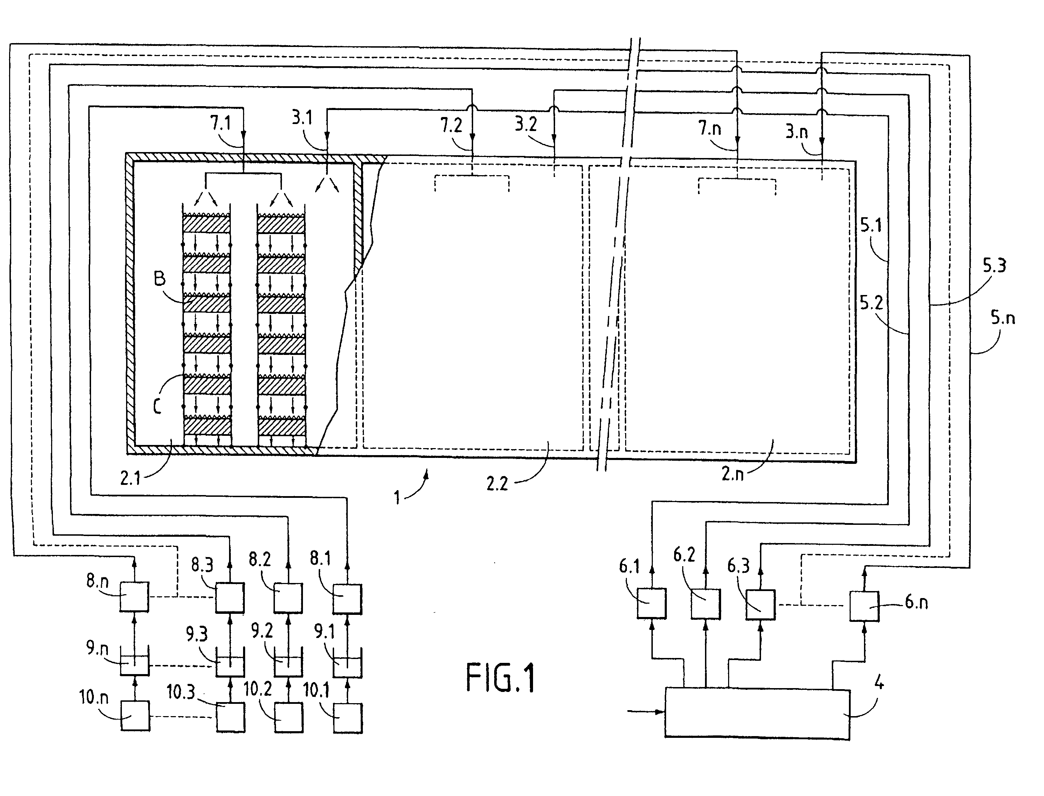

L'installation 1, conforme à la présente invention et représentée schématiquement sur la figure 1, comporte une pluralité de chambres indépendantes 2.1, 2.2, ..., 2.n (par exemple au nombre de sept) qui, éventuellement, peuvent être aménagées dans une chambre unique de grandes dimensions. Chacune des chambres 2.1, 2.2, ..., 2.n peut être close de façon à ce qu'il y règne l'obscurité. Dans chacune de ces chambres, sont disposées des piles de bacs B, dans lesquels sont rangées verticalement des racines d'endives à partir desquelles poussent les chicons C.

Dans chacune desdites chambres 2.1, 2.2, ..., 2.n, est prévu un dispositif de ventilation 3.1, 3.2, ..., 3.n individuel, susceptible d'introduire dans la chambre associée un flux d'air de ventilation de température réglable.

Pour cela, chacun des dispositifs de ventilation 3.1, 3.2, ..., 3.n peut être relié à un ventilateur commun 4 par des conduites de liaison 5.1, 5.2, ..., 5.n sur lesquelles sont respectivement montés des dispositifs de réglage de température 6.1, 6.2, ..., 6.n qui peuvent soit augmenter, soit abaisser la température du flux d'air provenant du ventilateur 4.

Ainsi, grâce à ces moyens, il est possible de régler à toute valeur désirée la température dans chacune desdites chambres 2.1, 2.2, ..., 2.n.

Par ailleurs, à chaque chambre 2.1, 2.2, ..., 2.n est associé un dispositif d'aspersion 7.1, 7.2, ..., 7.n capable d'arroser les piles de bacs B au moyen d'une solution nutritive de composition et de températures spécialement adaptées à la chambre 2.1, 2.2, ..., 2.n à laquelle ils sont associés. Pour ce faire, chaque dispositif d'aspersion 7.1, 7.2, ..., 7.n est relié à une pompe 8.1, 8.2, ..., 8.n prélevant une solution nutritive dans un bac 9.1, 9.2, ..., 9.n respectif, contenant une solution nutritive appropriée. Chacun des bacs 9.1, 9.2, ..., 9.n est associé à un dispositif de chauffage et/ou de refroidissement 10.1, 10.2, ..., 10.n apte à communiquer la solution nutritive se trouvant dans le bac 9.1, 9.2,..., 9.n correspondant, la température appropriée aux chicons disposés dans la chambre 2.1, 2.2,..., 2.n associée.

On voit qu'ainsi, dans chacune desdites chambres, il est possible de régler à volonté aussi bien la température du flux d'air de ventilation que la température de la solution nutritive.

Par ailleurs, dans l'installation de la figure 1, tous les chicons se trouvant dans l'une des chambres ont sensiblement le même nombre de jours de forçage décompté depuis le début de celui-ci.

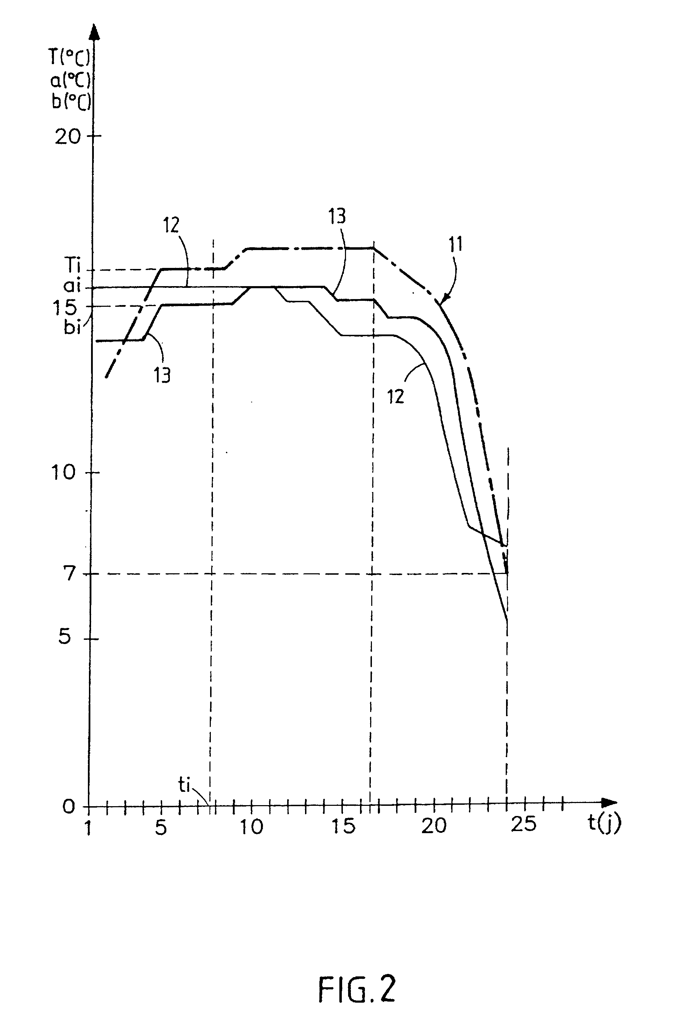

Sur la figure 2, on a représenté, en fonction du temps t (exprimé en jours), un exemple de pilotage de la température du coeur des chicons à l'aide de la température de l'air de ventilation et de la température de la solution nutritive, lesdites températures étant exprimées en °C.

Sur cette figure 2, la courbe 11 représente la variation de la température au coeur des chicons, tandis que les courbes 12 et 13 représentent respectivement les variations pilotées de la température de l'air de ventilation et de la température de la solution nutritive.

Ainsi, à chaque valeur ti du temps t, la valeur Ti de la température T au coeur des chicons est obtenue grâce à la valeur régulée ai de la température a du flux d'air de ventilation et à la valeur régulée bi de la température b de la solution nutritive, la valeur Ti de la température du coeur des chicons tenant compte des réactions thermiques propres desdits chicons.

Un exemple de l'évolution des températures a, b et T est représenté dans le tableau ci-après, correspondant aux courbes de la figure 2.

| t (jours) | a (°C) | b (°C) | T(°C) |
|---|---|---|---|
| 2 | 15,5 | 14 | 13 |
| 3 | 15,5 | 14 | 14 |
| 4 | 15,5 | 14 | 15 |
| 5 | 15,5 | 15 | 16 |
| 6 | 15,5 | 15 | 16 |
| 7 | 15,5 | 15 | 16 |
| 8 | 15,5 | 15 | 16 |
| 9 | 15,5 | 15 | 16 |
| 10 | 15,5 | 15,5 | 16,5 |
| 11 | 15,5 | 15,5 | 16,5 |
| 12 | 15 | 15,5 | 16,5 |
| 13 | 15 | 15,5 | 16,5 |
| 14 | 14,5 | 15,5 | 16,5 |
| 15 | 14 | 15 | 16,5 |
| 16 | 14 | 15 | 16,5 |
| 17 | 14 | 15 | 16,5 |
| 18 | 14 | 14,5 | 16 |
| 19 | 13,5 | 14,5 | 15,5 |
| 20 | 12,5 | 14 | 15 |
| 21 | 9,5 | 13 | 14 |
| 22 | 8 | 9 | 12,5 |
| 23 | 8 | 7 | 9,5 |
| 24 | 7,5 | 5 | 7 |

Comme on peut le voir, le forçage des endives est subdivisé en deux phases, à savoir :
- une première phase durant environ jusqu'à dix-septième jour, pendant laquelle la température T au coeur des chicons est maintenue inférieure à 18°C ; puis
- une seconde phase s'étendant du dix-septième au vingt quatrième jour, pendant laquelle la température du coeur des chicons est abaissée jusqu'à une valeur égale à 7°C par réglage des températures a et b.

Pour mettre en oeuvre la régulation de la température T telle qu'illustrée par le tableau ci-dessus et la figure 2, il est bien entendu possible de plonger des sondes de mesure de température dans le coeur de certains chicons témoins et d'utiliser le signal de sortie de ces sondes pour piloter automatiquement les températures a et b. Cependant, la commande des températures a et b peut être manuelle, l'opérateur effectuant ses réglages en fonction de la température lue sur un thermomètre placé dans un ou dans plusieurs chicons C.

## Revendications

1. Procédé pour le forçage hydroponique de chicons, selon lequel, pendant une durée supérieure à vingt jours, des racines d'endives, disposées dans l'obscurité, sont en permanence ventilées par un flux d'air et alimentées par une solution nutritive, les températures dudit flux d'air et de-ladite solution nutritive étant réglables,
**caractérisé en ce que**, au fur et à mesure de ladite durée de forçage :
- on mesure la température (T) au coeur d'au moins certains desdits chicons (C) ; et
- on agit sur la température (a) du flux d'air de ventilation et sur la température (b) de la solution nutritive pour donner, à ladite température (T) au coeur desdits chicons (C), une valeur qui dépend du temps de forçage (t) déjà écoulé depuis le début de ladite durée de forçage desdits chicons, afin de contrôler la pousse de l'axe de ces derniers.

2. Procédé salon la revendication 1,
**caractérisé en ce que** ladite durée de forçage est subdivisée en deux phases, à savoir :
- une première phase qui dure au plus jusqu'au dix-septième jour de forçage et à la fin de laquelle la température (T) au coeur desdits chicons (C) est au plus égale à 23°C ; et
- une seconde phase qui commence au plus tôt le quinzième jour de forçage et au cours de laquelle la température (T) atteinte par le coeur desdits chicons (C) à la fin de ladite première phase est progressivement diminuée jusqu'à une température finale de l'ordre de 6°C à 9°C.

3. Procédé selon la revendication 2,
**caractérisé en ce que** la durée totale du forçage est de vingt-quatre jours.

4. Installation pour le forçage hydroponique de chicons, dans laquelle des racines d'endives, disposées dans l'obscurité, sont en permanence ventilées par un flux d'air et alimentées par une solution nutritive,
**caractérisée en ce qu'**elle comporte :
- une pluralité de chambres (2.1 à 2.n) ;
- une pluralité de moyens de ventilation (3.1 à 3.n), dont chacun d'eux est associé à l'une desdites chambres et est apte à introduire dans la chambre associée un flux d'air de température réglable ; et
- une pluralité de moyens d'alimentation en solution nutritive (7.1 à 7.n), dont chacun d'eux est associé à l'une desdites chambres et est apte à alimenter la chambre associée avec une solution nutritive de température réglable.

5. Installation selon la revendication 4,
**caractérisée en ce qu'**elle comporte sept chambres (2.1 à 2.n).

## Patentansprüche

1. Verfahren zum hydroponischen Treiben von Chicorée, wobei während einer Dauer von über zwanzig Tagen im Dunkeln angeordnete Chicoréewurzeln permanent durch einen Luftstrom belüftet und durch eine Nährlösung gespeist werden, wobei die Temperaturen des Luftstroms und der Nährlösung regulierbar sind, **dadurch gekennzeichnet, dass** man im Verlauf der Treibdauer:
- die Temperatur (T) im Herzen von mindestens einigen Chicorees (C) misst; und
- auf die Temperatur (a) des Luftstroms zur Belüftung und auf die Temperatur (b) der Nährlösung einwirkt, um der Temperatur (T) im Herzen der Chicorées (C) einen Wert zu verleihen, der von der Treibzeit (t) abhängt, die bereits seit dem Beginn der Treibdauer der Chicorées vergangen ist, um das Wachstum der Achse der letztgenannten zu kontrollieren.

2. Verfahren nach Anspruch 1, **dadurch gekennzeichnet, dass** die Treibdauer in zwei Phasen unterteilt ist, nämlich:
- eine erste Phase, die maximal bis zum siebzehnten Treibtag dauert und an deren Ende die Temperatur (T) im Herzen der Chicorées (C) maximal gleich 23°C beträgt; und
- eine zweite Phase, die frühestens am fünfzehnten Treibtag beginnt und während der die Temperatur (T), die im Herzen der Chicorées (C) am Ende der ersten Phase erreicht wurde, allmählich bis auf eine Endtemperatur in der Größenordnung von 6°C bis 9°C verringert wird.

3. Verfahren nach Anspruch 2, **dadurch gekennzeichnet, dass** die Gesamtdauer des Treibens vierundzwanzig Tage beträgt.

4. Anlage zum hydroponischen Treiben von Chicorée, wobei die im Dunkeln angeordneten Chicoréewurzeln permanent durch einen Luftstrom belüftet und durch eine Nährlösung gespeist werden, **dadurch gekennzeichnet, dass** sie umfasst:
- eine Vielzahl von Kammern (2.1 bis 2.n);
- eine Vielzahl von Beluftungsmitteln (3.1 bis 3.n), von denen jedes einer der Kammern zugeordnet ist und in der Lage ist, in die dazugehörige Kammer einen Luftstrom mit regulierbarer Temperatur einzubringen; und
- eine Vielzahl von Mitteln zum Speisen mit Nährlösung (7.1 bis 7.n), von denen jedes einer der Kammern zugeordnet ist und in der Lage ist, die dazugehörige Kammer mit einer Nährlösung mit regulierbarer Temperatur zu versorgen.

5. Anlage nach Anspruch 4, **dadurch gekennzeichnet, dass** sie sieben Kammern (2.1 bis 2.n) umfasst.

## Claims

1. Method for the hydroponic forcing of chicory heads, according to which, for a period of greater than twenty days, roots of chicory plants, placed in the dark, are permanently ventilated with a flow of air and fed with a nutritive solution, the temperatures of said flow of air and of said nutritive solution being controllable,
**characterized in that**, in the course of said period of forcing:
- the temperature (T) at the heart of at least some of said chicory heads (C) is measured; and
- the temperature (a) of the ventilation air flow and the temperature (b) of the nutritive solution are adjusted so as to give said temperature (T) at the heart of said chicory heads (C) a value which depends on the amount of forcing time (t) which has already elapsed since the beginning of said period of forcing said chicory heads, in order to control the growth of the main stem of the latter.

2. Method according to Claim 1,
**characterized in that** said period of forcing is subdivided into two phases, namely:
- a first phase which lasts at most up to the seventeenth day of forcing and at the end of which the temperature (T) at the heart of said chicory heads (C) is at most equal to 23°C; and
- a second phase which begins at the earliest on the fifteenth day of forcing and during which the temperature (T) reached by the heart of the chicory heads (C) at the end of said first phase is gradually decreased to a final temperature of the order of 6°C to 9°C.

3. Method according to Claim 2,
**characterized in that** the total duration of the forcing is twenty four days.

4. Installation for the hydroponic forcing of chicory heads, in which roots of chicory plants, placed in the dark, are permanently ventilated with a flow of air and fed with a nutritive solution,
**characterized in that** it comprises:
- a plurality of chambers (2.1 to 2.n);
- a plurality of ventilation means (3.1 to 3.n), each one of which is associated with one of said chambers and is able to introduce into the associated chamber a flow of air of controllable temperature; and
- a plurality of means for feeding with nutritive solution (7.1 to 7.n), each one of which is associated with one of said chambers and is able to feed the associated chamber with a nutritive solution of controllable temperature.

5. Installation according to Claim 4,
**characterized in that** it comprises seven chambers (2.1 to 2.n).
